# EUROPEAN PATENT APPLICATION

(11) **EP 3 835 745 A1**
(43) Date of publication of application: **16.06.2021**
(21) Application number: 19214882.3
(22) Date of filing: 10.12.2019
(51) Int. Cl.: G01L 5/00, G01L 19/06, G01L 19/14, A01M 29/34, A01N 25/10, H05K 5/02

(54) **DOOR PRESSURE SENSOR ASSEMBLY**

(71) Applicant: Veoneer Sweden AB, 447 37 Vårgårda (SE)
(72) Inventor: TARTROU, Jean, 95800 Cergy-Pontoise (FR); LEBRUN, Gregory, 95800 Cergy-Pontoise (FR)
(74) Representative: Reichert & Lindner Partnerschaft Patentanwälte

(57) **Abstract**

The invention relates to a door pressure sensor assembly (1). The door pressure sensor assembly (1) has a housing (2) and a support (10). A channel (12) is part of the support (10) and leads to an opening (14) of the support (10). At least the channel (12) and an area around the opening (14) is made from a plastic which is loaded with an insect repellent.

## Description

### FIELD OF THE INVENTION

The invention relates to a door pressure sensor assembly. The door pressure sensor assembly comprises a housing which carries a sensor element. A support comprises a channel formed thereon which leads to an opening of the support. The sensor element is positioned in the housing so that is faces the opening.

### DESCRIPTION OF THE BACKGROUND ART

U.S. Patent 5,102,662 A relates to a composition which is an unexpanded plastic resinous material having uniformly dispersed and incorporated therein discrete particles of a highly cross-linked macroporous hydrophobic polymer. The polymer has entrapped therein a chemical which is a repellent for insects. The chemical is compatible with the unexpanded plastic resinous material.

International patent application WO 2008/104414 A2 discloses a sensor which has a fixing unit for fixing the air-pressure sensor to a wall of a vehicle. The fixing unit exhibits a structure in a region of a pressure inlet channel that runs through an opening in a vehicle door. The structure is formed in such a manner that the structure permits the air-pressure sensor to be hooked onto the vehicle wall.

Door pressure sensors for crash detection can fail due to intrusion of insects into the housing and making contact with, or blocking the sensing element. A current solution to restrict insect access to a sensing element is, for example, to have a sensor casing with a small opening. The casing has for example 4 holes of 0.6 mm diameter each in order to block insects and to allow an ambient change in air pressure to reach the sensor. However, this mechanical barrier cannot guarantee a complete protection and allow reliable operation of the door pressure sensor.

### SUMMARY OF THE INVENTION

It is therefore an object of the present invention to provide a door pressure sensor assembly which allows a reliable operation of the sensor element without the need of additional structural elements and avoids clogging of sensor access.

The above object is achieved by a door pressure sensor assembly which comprises the features of claim 1.

According to an embodiment of the invention, the door pressure sensor assembly has a sensor element, a housing and a support. The housing carries the sensor element and is positioned on the support. The support has a channel formed thereon. The channel leads to an opening of the support. The sensor element is positioned in the housing so that it faces the opening. Due to this configuration, an air flow entering an opening at the free end of the channel can progress to and reach the sensor element. At least the channel and an area around the opening is made from a plastic which is loaded with an insect repellent.

In an embodiment, the support and the channel are made from the plastic, which is loaded with the insect repellent.

The advantage of the invention is that the sensor element of the door pressure sensor assembly for crash detection does not fail due to intrusion of insects into the channel of the support. Due to insect repellent, the contact of the insects with the sensor element is avoided and the air flow can fully access the sensor element, which in turn allows a more reliable operation of the door pressure sensor. Furthermore, a damage of the sensor element, due to insects, is avoided and ultimately a false pressure reading is avoided.

The use of a plastic with a chemical mix for modelling at least the channel, and optionally also the support, can repel insects and prevent the intrusion into the channel. As a result, a chemical barrier is created around the sensor element without requiring a mechanical barrier in front of the sensor element, allowing for reliable operation of the door pressure sensor.

### BRIEF DESCRIPTION OF THE DRAWINGS

The numerous advantages of the disclosure may be better understood by those skilled in the art by reference to the accompanying figures in which:
**FIG. 1** shows a sectional view of a door pressure sensor assembly according to the prior art.
**FIG. 2** shows a sectional view of a door pressure sensor assembly according to an embodiment of the present invention.

### DETAILED DESCRIPTION

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

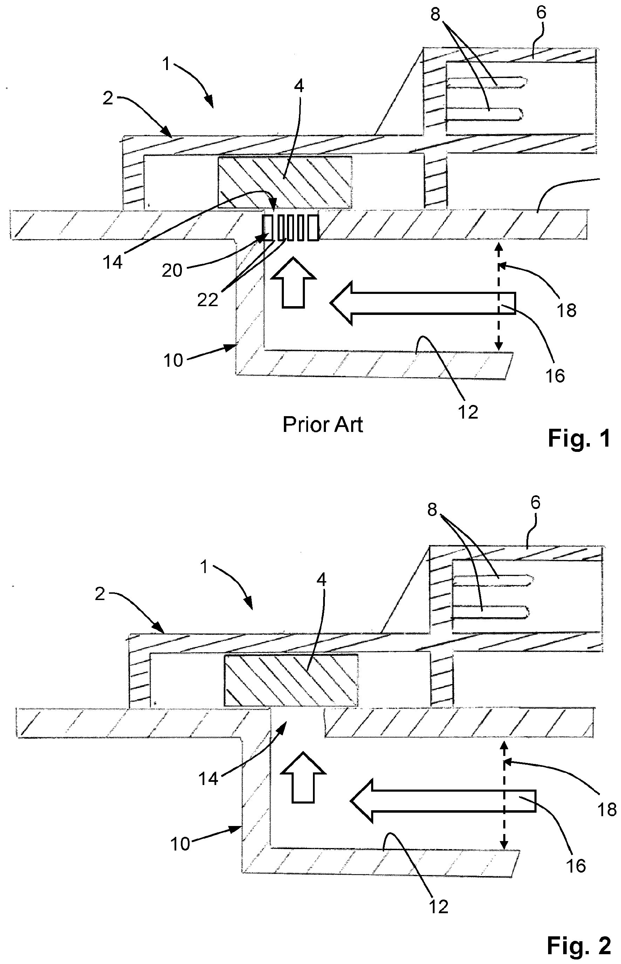

**Fig. 1** is a sectional view of a door pressure sensor assembly 1 according to the prior art. The sensor assembly 1 has a housing 2 which is formed, for example, by injection moulding of a plastic material (thermoplast or resin). The housing 2 has an electrical connector 6 formed thereon. The electrical connector 6 includes internal terminals 8 which provide an electrical connection to a logic unit (not shown). The sensor element 4 is positioned in the housing 2. The housing 2 is mounted on a support 10. The support 10 has a channel 12 formed thereon which leads to an opening 14, which allows an air flow 16 flowing from a channel opening 18 to the sensor element 4. The opening 14 is closed with a casing 20 which has a plurality of holes 22.

**Fig. 2** is a sectional view of a door pressure sensor assembly 1 according to an embodiment of the invention. The structural elements of the inventive concept are identical to the structural elements of the prior art and as described in Fig. 1. Therefore, it is not required to describe the structural elements twice. In general, the main feature of the invention is to use a plastic for the housing that is loaded with insect repellent. According to an embodiment of the invention, at least the channel 12 and an area around the opening 14 to the sensor 4 is made of a plastic material that incorporates a chemical which is a repellent against insects. The plastic material has a composition as described, for example, in US 5,102, 662 A, which is incorporated by reference herein. According to a preferred embodiment of the invention, the support 10 and the channel are made from the plastic material that incorporates the chemical which is a repellent for insects. The advantage of the invention is that the opening 14 does not carry any structural elements, such as the casing 20 with its holes 22 in Fig. 1, which form an obstacle for the air flow 16 to the sensor element 4. Due to this configuration, the complete air flow 16 entering the channel opening 18 at the free end of the channel 12 can progress to and reach the sensor element 4, allowing for a more reliable operation of the door pressure sensor 1 in comparison with the prior art embodiment of Fig. 1.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: door pressure sensor assembly
- 2: housing
- 4: sensor element
- 6: electrical connector
- 8: internal terminal
- 10: support
- 12: channel
- 14: opening
- 16: air flow
- 18: channel opening
- 20: casing
- 22: hole

## Claims

1. A door pressure sensor assembly (1) comprising
a sensor element (4),
a housing (2) which carries the sensor element (4), and
a support (10) with a formed on channel (12) which leads to an opening (14) of the support (10), wherein the sensor element (4) is positioned in the housing so that it faces the opening (14),
**characterized in that**
at least the channel (12) and an area around the opening (14) is made from a plastic which is loaded with an insect repellent.

2. The door pressure sensor assembly (1) as claimed in claim 1, wherein the support (10) and the channel (12) are made from the plastic, which is loaded with the insect repellent.
